# EUROPÄISCHE PATENTSCHRIFT

(11) **EP 2 886 424 B1**
(45) Veröffentlichungstag und Bekanntmachung des Hinweises auf die Patenterteilung: **06.07.2016**
(21) Anmeldenummer: 13198544.2
(22) Anmeldetag: 19.12.2013
(51) Int. Cl.: B62D 21/20

(54) **Bogenförmiges Fahrzeugrahmenfrontmodul für Fahrzeuganhänger**
Arched vehicle frame front module for vehicle trailers
Module frontal de châssis en forme d'arc pour remorques de véhicules

(43) Veröffentlichungstag der Anmeldung: 24.06.2015
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- DE-U1- 29 820 320
- US-A- 2 329 408
- US-A- 2 507 845
- US-A1- 2006 181 056

## Beschreibung

### Technisches Gebiet

Die vorliegende Erfindung betrifft ein Fahrzeugrahmenfrontmodul, insbesondere ein Fahrzeugrahmenfrontmodul eines Fahrzeugrahmens für Fahrzeuganhänger mit bogenförmigem Frontbereich. Außerdem betrifft die vorliegende Offenbarung einen Fahrzeugrahmen für Fahrzeuganhänger.

### Technischer Hintergrund

Fahrzeuganhänger weisen üblicherweise einen Fahrzeugrahmen auf, der aus Längs- und Querträgern besteht, die zumeist miteinander verschweißt sind. Dabei ist es bekannt, den Fahrzeugrahmen aus mehreren zusammengefügten Modulen herzustellen, die ebenfalls miteinander verschweißt sind.

Fahrzeugrahmen weisen einen Heckbereich und einen Frontbereich auf, die jeweils wiederum modular ausgeführt sein können. Bei Sattelanhängern weist der Frontbereich einen Königszapfen auf, über den der Fahrzeuganhänger mit einem Zugfahrzeug verbunden werden kann. Auf dem Fahrzeugrahmen können Aufbauten, wie z. B. eine Kippmulde, ein Planenaufbau oder ein Container, aufgesetzt und mit diesem verbunden werden.

Bekannte Fahrzeugrahmenfrontmodule sind in Draufsicht in eckiger Form ausgestaltet. Dabei sind die beiden im Wesentlichen von vorne nach hinten verlaufenden Längsträger im Frontbereich mit wenigstens einem Querträger miteinander verbunden, der im Wesentlichen senkrecht zu den Längsträgern verläuft und jeweils an beiden Seiten mit den Längsträgern verschweißt ist.

Beispielsweise ist aus der WO 2013/072506 A1 ein Fahrzeuganhänger-Chassis für Sattelauflieger bekannt, das Längsträger und frontseitig eine Platte mit einer Sattelauflageplatte mit Königszapfen aufweist. Dabei ist das Chassis mehrteilig ausgebildet und weist ein hinteres Rumpfteil mit Längsträgern und ein vorderes Frontteil mit der Platte und der Zugverbindung auf. Das Frontteil weist in Draufsicht eine eckige Form auf, die aus zwei parallelen Längsträgern und wenigstens einem senkrecht zu den Längsträgern verlaufenden Querträger aufweist, der mit den Längsträgern verschweißt ist.

Ferner zeigt die DE 10 2007 025 041 B3 einen aus Kröpfungssegment und Achssegment bestehenden Längsträger für das Chassis eines Sattelaufliegers. Die beiden Segmente sind durch Blechumformung in Form von Trägern hergestellt, die aus einem vertikalen Steg und wenigstens einem am Ende des jeweiligen Stegs tragenden Gurt bestehen, und in einem Verbindungsbereich miteinander verbunden sind.

Aus der US 2006/0181056 A1 ist ein Fahrzeuganhänger mit einem Fahrzeugrahmen aus Aluminium bekannt, der Seitenschienen mit bogenförmigen vorderen Bereichen aufweist, die derart zusammenlaufen, dass sie nach vorne hin parallel verlaufen und miteinander verbunden sind.

Die US 2 507 845 A und die US 2 329 408 A zeigen jeweils einen Fahrzeuganhängerrahmen für Sattelfahrzeuge, die zwei parallel verlaufende und beabstandet zueinander angeordnete Längsträger und einen gebogenen Vorderbereich aufweisen, die die beiden Längsträger miteinander verbinden.

Die DE 298 20 320 U1 zeigt einen Kraftfahrzeuganhänger, bestehend aus einer Ladeplattform aus einer Faltplattform mit mindestens zwei gelenkig miteinander verbundenen Plattformteilen, die um mindestens eine Querachse zwischen einer auseinander geklappten, ausgestreckten Betriebsstellung und einer zusammengeklappten Nichtgebrauchsstellung verschwenkbar sind.

### Darstellung der Erfindung

Gemäß der vorliegenden Offenbarung weist ein Fahrzeugrahmenfrontmodul eines Fahrzeugrahmens für einen Fahrzeuganhänger einen einem Zugfahrzeug zugewandten vorderen Bereich und einem dem Zugfahrzeug abge wandten hinteren Bereich auf. Ferner weist das erfindungsgemäße Fahrzeugrahmenfrontmodul einen ersten vertikalen Steg mit einem ersten geraden Bereich und einem ersten bogenförmigen Bereich und einen zweiten vertikalen Steg mit einem zweiten geraden Bereich und einem zweiten bogenförmigen Bereich auf. Der erste bogenförmige Bereich des ersten vertikalen Stegs und der zweite bogenförmige Bereich des zweiten vertikalen Stegs sind miteinander verbunden, so dass ein bogenförmiges Fahrzeugrahmenfrontmodul gebildet ist, bei dem in Draufsicht das vordere Ende geschlossen und das hintere Ende offen ist. Außerdem weisen der erste gerade Bereich und der zweite gerade Bereich einen in einer Richtung vom vorderen Bereich zum hinteren Bereich divergierenden Verlauf auf.

Mit dem erfindungsgemäßen Fahrzeugrahmenfrontmodul kann die Anzahl der vertikalen Schweißnähte gegenüber einer in Draufsicht eckigen Konstruktion, bei der ein Querträger mit zwei Längsträgern verschweißt ist, verringert werden. Zusätzlich kann bei einer geringeren Anzahl von vertikalen Schweißnähte die damit verbundene eingebrachte Wärmeenergie verringert werden, wodurch sich der thermische Verzug des Fahrzeugrahmenfrontmoduls reduzieren kann. Dies kann neben dem Fertigungsaufwand und der Produktions- und Schweißzeit auch die potentiellen Bruchstellen reduzieren, die bevorzugt in der Nähe von Schweißnähten auftreten können.

Außerdem dürfte bei einem erfindungsgemäßen Fahrzeugrahmenfrontmodul das Risiko vermindert sein, dass bei Abbiegevorgängen eines Zuggespanns die zwischen der Zugmaschine und dem Fahrzeuganhänger verlaufenden hydraulischen, pneumatischen und/oder elektrischen Verbindungsleitungen beschädigt oder eventuell sogar abgerissen werden. Bei einem erfindungsgemäßen Fahrzeugrahmenfrontmodul sind vorzugsweise eventuelle "Einhakstellen" für Verbindungsleitungen reduziert.

Bei einer bevorzugten Ausgestaltung des erfindungsgemäßen Fahrzeugrahmenfrontmoduls weist das Fahrzeugrahmenfrontmodul ferner einen ersten Obergurt, der mit einer Oberseite des ersten vertikalen Stegs verbunden ist, und einen zweiten Obergurt, der mit einer Oberseite des zweiten vertikalen Stegs verbunden ist, auf. Der erste vertikale Steg bildet zusammen mit dem ersten Obergurt einen ersten Längsträger und der zweite vertikale Steg bildet zusammen mit dem zweiten Obergurt einen zweiten Längsträger. Vorzugsweise bilden der erste Längsträger und der zweite Längsträger ein T-Profil.

In einer Ausführung sind der erste vertikale Steg und der zweite vertikale Steg einstückig. Dieser eine vertikale Steg weist demnach den ersten geraden Bereich, einen bogenförmigen Bereich, der aus dem ersten und zweiten bogenförmigen Bereich gebildet wird, und den zweiten geraden Bereich auf. In dieser Ausgestaltung weist das Fahrzeugrahmenfrontmodul keine vertikalen Schweißnähte auf, wodurch die Herstellungszeit und -kosten weiter reduziert werden können.

Vorzugsweise sind der erste Obergurt mit dem ersten vertikalen Steg mit zumindest einer ersten Schweißnaht und der zweite Obergurt mit dem zweiten vertikalen Steg mit zumindest einer zweiten Schweißnaht verbunden. Bevorzugt sind jeweils mehrere erste und zweite Schweißnähte mit bestimmten Längen vorgesehen, die aus dem ersten vertikalen Steg und dem ersten Obergurt den ersten Längsträger und aus dem zweiten vertikalen Steg und dem zweiten Obergurt den zweiten Längsträger bilden. In weiteren Ausführungsformen sind der erste und zweite Obergurt mit dem ersten und zweiten vertikalen Steg entlang der gesamten Länge des ersten und zweiten vertikalen Stegs verschweißt.

In einer beispielhaften Ausführungsform können der erste vertikale Steg und der zweite vertikale Steg einstückig sein, wobei der erste Obergurt und der zweite Obergurt getrennte Bauteile sind, die mit dem durchgängigen vertikalen Steg verbunden sind. Vorzugsweise wird der durchgängige vertikale Steg gebogen, damit der vordere bogenförmige Bereich gebildet wird. Daraufhin können der erste Obergurt und der zweite Obergurt mit der Oberseite des ersten und zweiten vertikalen Stegs verbunden werden. Vorzugsweise werden der erste Obergurt und der zweite Obergurt aus einer Platte ausgeschnitten, so dass der erste Obergurt und der zweite Obergurt ebenfalls jeweils einen geraden Bereich und einen bogenförmigen Bereich aufweisen.

Ein weiterer Aspekt der vorliegenden Offenbarung betrifft einen Fahrzeugrahmen für einen Fahrzeuganhänger. Der erfindungsgemäße Fahrzeugrahmen weist einen Fahrzeugrahmenheckbereich mit einem ersten Hauptlängsträger und einem zweiten Hauptlängsträger, der sich zum ersten Hauptlängsträger im Wesentlichen parallel erstreckt, und ein erfindungsgemäßes Fahrzeugrahmenfrontmodul auf. Der erste vertikale Steg ist mit dem ersten Hauptlängsträger und der zweite vertikale Steg ist mit dem zweiten Hauptlängsträger verbunden.

In einer weiteren Ausführungsform sind ein erstes Ende des ersten bogenförmigen Bereichs und ein zweites Ende des zweiten bogenförmigen Bereichs direkt miteinander verschweißt. Bevorzugt sind die beiden Enden des ersten und zweiten bogenförmigen Bereichs an Ihren Stoßenden miteinander verschweißt.

In einer weiteren beispielhaften Ausführungsformweist das Fahrzeugrahmenfrontmodul ferner einen ersten Untergurt, der mit einer Unterseite des ersten vertikalen Stegs verbunden ist, und einen zweiten Untergurt, der mit einer Unterseite des zweiten vertikalen Stegs verbunden ist, auf. Vorzugsweise bilden der erste Obergurt, der erste vertikale Steg und der erste Untergurt einen ersten Längsträger mit Doppel-T-Profil und der zweite Obergurt, der zweite vertikale Steg und der zweite Untergurt einen zweiten Längsträger mit Doppel-T-Profil.

Der erste Längsträger und der zweite Längsträger können in alternativen Ausführungsformen ein L-Profil, Rundprofil, Rechteckprofil, Ovalprofil oder Kombinationen davon aufweisen.

Ähnlich wie der erste und zweite Obergurt kann auch der erste und zweite Untergurt mit dem vertikalen Steg an zumindest einer Stelle verbunden bzw. verschweißt sein. An den jeweiligen Stellen können beispielsweise Schweißnähte mit unterschiedlichen Längen vorgesehen sein. Alternativ können der erste und zweite Untergurt mit dem ersten und zweiten vertikalen Steg auch entlang der gesamten Länge des ersten und zweiten vertikalen Stegs verschweißt sein.

Das erfindungsgemäße Fahrzeugrahmenfrontmodul kann ferner eine Tragplatte aufweisen, die an einer Unterseite des ersten vertikalen Stegs und des zweiten vertikalen Stegs angeordnet ist. Die Tragplatte erstreckt sich bevorzugt zwischen dem ersten vertikalen Steg und dem zweiten vertikalen Steg und ist zum Übertragen vertikaler Abstützungskräfte auf eine zugfahrzeugseitige Sattelkupplungsplatte ausgebildet. In einer beispielhaften Ausgestaltung kann die Tragplatte die Untergurte der jeweiligen Längsträger ersetzen, was zu einer zusätzlichen Gewichtsreduktion führen kann. Alternativ ist die Tragplatte an den Unterseiten der Untergurte angebracht.

In einer weiteren beispielhaften Ausführungsformweist die Tragplatte eine Vorderkante auf, die nach schräg oben abgekantet. Die Vorderkante der Tragplatte ist diejenige Kante, die sich in Längsrichtung des Fahrzeugrahmenfrontmoduls an der Seite befindet, von der aus das Zugfahrzeug an dem Fahrzeugrahmenfrontmodul gekoppelt wird. Dies gewährleistet, dass beim Heranfahren des Zugfahrzeugs, meistens rückwärtsfahrend, die zugfahrzeugseitige Sattelkupplungsplatte unter die Tragplatte gelangt, so dass die fahrzeuganhängerseitige Tragplatte auf der zugfahrzeugseitigen Sattelkupplungsplatte aufliegt und ein an der Tragplatte vorgesehener Königszapfen in der zugfahrzeugseitigen Sattelkupplung verriegelt werden kann. In dieser Ausgestaltung kann demnach vermieden werden, dass die Tragplatte stoßseitig mit der Sattelkupplungsplatte in Berührung kommt.

Das erfindungsgemäße Fahrzeugrahmenfrontmodul weist in einer Ausführungsform wenigstens einen ersten Querträger auf, der sich zwischen dem ersten vertikalen Steg und dem zweiten vertikalen Steg in Längsrichtung vor dem Königszapfen erstreckt. In einer weiteren Ausführungsform ist wenigstens ein zweiter Querträger vorgesehen, der sich zwischen dem ersten vertikalen Steg und dem zweiten vertikalen Steg erstreckt. Bevorzugt befindet sich der zweite Querträger in Längsrichtung hinter dem Königszapfen. Der erste und zweite Querträger können die Stabilität und die Steifigkeit des gesamten Fahrzeugrahmenfrontmoduls erhöhen.

Das hierin offenbarte Fahrzeugrahmenfrontmodul kann ferner wenigstens einen Stützlängsträger aufweisen, der mit dem ersten bogenförmigen Bereich des ersten vertikalen Stegs oder dem zweiten bogenförmigen Bereich des zweiten vertikalen Stegs verbunden ist und sich im Bereich zwischen dem ersten vertikalen Steg und dem zweiten vertikalen Steg im Wesentlichen von vorne nach hinten erstreckt. Der wenigstens eine Stützlängsträger kann ebenfalls zu einer erhöhten Stabilität und Steifigkeit des Frontrahmenmoduls beitragen. Vorzugsweise sind ein erster Stützlängsträger in Längsrichtung links neben dem Königszapfen und ein zweiter Stützlängsträger in Längsrichtung rechts neben dem Königszapfen vorgesehen. In einer solchen Ausgestaltung können die beiden Längsträger zusammen mit dem wenigstens einen Querträger sowohl die Tragplatte als auch das gesamte Fahrzeugrahmenfrontmodul versteifen und verstärken, was zu einer optimalen Kraftverteilung und einem optimalen Kräftefluss der Abstützungskräfte in die zugfahrzeugseitige Sattelkupplungsplatte führen kann.

Zusätzlich zur Funktion des Versteifens des Fahrzeugrahmenfrontmoduls kann der wenigstens eine Stützlängsträger vorzugsweise dazu ausgebildet sein, eine Kippzylinderkonsole aufzunehmen, die einen Hubzylinder umfasst, der eine auf dem Fahrzeugrahmen aufgesetzte Kippmulde anheben kann. Vorzugsweise sind zwei Stützlängsträger vorgesehen, an denen Kippzylinderkonsole angebracht werden kann.

Der erfindungsgemäße Fahrzeugrahmen kann ferner einen Fahrzeugrahmenübergangsbereich aufweisen, der zwischen dem Fahrzeugrahmenheckbereich und dem Fahrzeugrahmenfrontmodul angeordnet ist. Der Fahrzeugrahmenübergangsbereich weist zwei Hauptlängsträger auf, die z. B. als Doppel-T-Profil. T-Profil, L-Profil oder Hohlprofil ausgeführt sein können. Vorzugsweise ist der seitliche Abstand der Längsträger des Fahrzeugrahmenfrontmoduls kleiner als der seitliche Abstand der Hauptlängsträger des Fahrzeugrahmenheckbereichs. In einer beispielhaften Ausgestaltung ist die Höhe der Längsträger des Fahrzeugrahmenfrontmoduls kleiner als die Höhe der Hauptlängsträger des Fahrzeugrahmenheckmoduls.

In einer weiteren beispielhaften Ausführungsformkann das erfindungsgemäße bogenförmige Fahrzeugrahmenfrontmodul einen durchgängigen kreisförmigen vertikalen Steg aufweisen, an dessen in Vorwärtsrichtung linker und rechter Position jeweils ein vertikaler Steg tangential angebracht ist und im Wesentlichen von vorne nach hinten verläuft. Beispielsweise kann der kreisförmige vertikale Steg ein Rohrstück sein, an dessen Oberseite ein ringförmiger Obergurt angebracht werden kann. In dieser Ausgestaltung kann der dem vorderen bogenförmigen Bereich des vertikalen Stegs gegenüberliegende hintere bogenförmige Bereich des vertikalen Stegs einen Querträger ersetzen und das Fahrzeugrahmenfrontmodul zusätzlich versteifen.

Der erfindungsgemäße Fahrzeugrahmen ist in einer Ausgestaltung als Fahrzeugrahmen eines Kippsattelaufliegers ausgebildet. In dieser Ausführungsform weist der Fahrzeugrahmen ferner eine am Fahrzeugrahmenfrontmodul angeordnete Hubzylinderaufnahme für eine Hubzylinderanordnung, die zum Schwenken einer auf dem Fahrzeugrahmen aufgebrachten Kippmulde angepasst ist, und eine sich am hinteren Ende des Fahrzeugrahmenheckbereichs befindliche Schwenkachse auf, um die die Kippmulde geschwenkt werden kann.

### Kurze Beschreibung der Zeichnungen

Weitere Merkmale und Aspekte dieser Offenbarung werden durch die folgende Beschreibung und die beiliegenden Zeichnungen offensichtlich in denen:
Fig. 1 eine Draufsicht auf ein erfindungsgemäßes Fahrzeugrahmenfrontmodul zeigt,
Fig. 2 eine perspektivische Ansicht des in der Fig. 1 dargestellten Fahrzeugrahmenfrontmoduls zeigt,
Fig. 3 eine weitere perspektivische Ansicht des in Fig. 1 und 2 dargestellten Fahrzeugrahmenfrontmoduls zeigt,
Fig. 4 eine perspektivische Ansicht eines erfindungsgemäßen Fahrzeugrahmens mit einem erfindungsgemäßen Fahrzeugrahmenfrontmodul zeigt, und
Fig. 5 eine perspektivische Ansicht einer weiteren Ausführungsform eines erfindungsgemäßen Fahrzeugrahmenfrontmoduls zeigt.

### Ausführliche Beschreibung von Ausführungsbeispielen

In der Beschreibung dieser Erfindung beziehen sich Richtungsangaben auf einen Fahrzeuganhänger bei Vorwärtsfahrt. In seitlicher Richtung bedeutet somit diejenige Richtung, die entlang der Senkrechten zu einem Vorwärtsfahrtrichtungsvektor des Fahrzeuganhängers ist und der Links-Rechts-Richtung entspricht.

Im Rahmen der vorliegenden Offenbarung kann unter "miteinander verbunden" subsumiert werden, dass zwei oder mehrere miteinander verbundene Bauteile oder Bereiche auch einstückig sein können, d. h. dass diese Bauteile von einem einzigen Bauteil dargestellt sein können. Demnach kann es beispielsweise bevorzugt sein, dass der erste vertikale Steg und der zweite vertikale Steg einstückig sind, so dass das Fahrzeugrahmenfrontmodul lediglich einen durchgängigen vertikalen Steg aufweist, der den ersten geraden Bereich, den ersten und zweiten bogenförmigen Bereich und den zweiten geraden Bereich auf weist. In einer solchen Ausgestaltung können dann ebenfalls jeweils der Obergurt und, sofern vorhanden, der Untergurt einstückig ausgeführt sein.

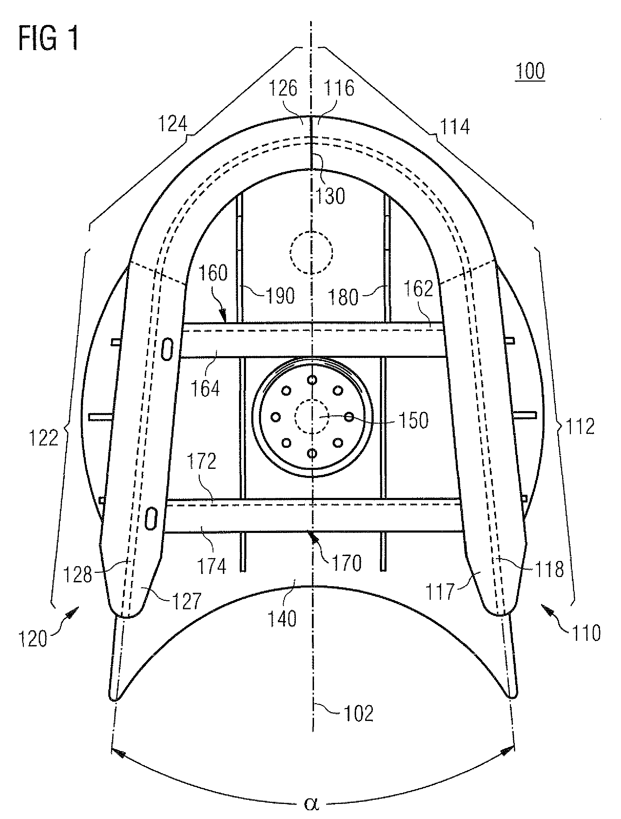

Eine beispielhafte Ausführungsform eines erfindungsgemäßen Fahrzeugrahmenfrontmoduls 100 ist in den Fig. 1 bis 3 gezeigt. Das darin gezeigte Fahrzeugrahmenfrontmodul 100 weist einen ersten Längsträger 110 und einen zweiten Längsträger 120 auf. Der erste Längsträger 110 besteht aus einem ersten geraden Bereich 112 und einem ersten bogenförmigen Bereich 114. In ähnlicher Weise besteht der zweite Längsträger 120 aus einem zweiten geraden Bereich 122 und einem zweiten bogenförmigen Bereich 124. Der erste bzw. zweite bogenförmige Bereich 114, 124 sind dadurch gekennzeichnet, dass diese gegenüber dem ersten bzw. zweiten geraden Bereich 112, 122 in Draufsicht gekrümmt verlaufen. Beispielsweise sind der erste bzw. zweite bogenförmige Bereich 114, 124 teilkreisförmig mit konstantem Radius ausgeführt. Jedoch kann der erste bzw. zweite bogenförmige Bereich 114, 124 in einer anderen Ausgestaltung in Drauf sicht derart ausgestaltet sein, dass mehrere Abschnitte abgekantet sind, so dass im Ganzen der erste bzw. zweite bogenförmige Bereich 114, 124 gebildet werden.

Der erste bogenförmige Bereich 114 und der zweite bogenförmige Bereich 124 bilden in Draufsicht im Wesentlichen eine Form, die die nach vorne geschlossen und nach hinten offen ist. Insbesondere haben die miteinander verbundenen ersten und zweiten bogenförmigen Bereiche 114, 124 in Draufsicht eine im Wesentlichen U-förmige oder V-förmige Gestalt.

Der erste gerade Bereich 112 bzw. der zweite gerade Bereich 122 verlaufen im Wesentlichen von hinten nach vorne und gehen jeweils nahtlos in den ersten bzw. zweiten bogenförmigen Bereich 114, 124 über. Der hintere Bereich des Fahrzeugrahmenfrontmodules 100 ist dabei derjenige Bereich, an dem die geraden Bereiche 112, 122 vorgesehen sind. Der erste und der zweite gerade Bereich 112, 122 verlaufen im Wesentlichen unter einem Winkel α zueinander von hinten nach vorne, so dass der erste gerade Bereich 112 und der zweite gerade Bereich 122 von vorne nach hinten divergieren, insbesondere sich der seitliche Abstand der zwischen dem ersten geraden Bereich 112 und dem zweiten geraden Bereich 122 von vorne nach hinten vergrößert.

In einer weiteren Ausgestaltung sind der erste Längsträger 110 und der zweite Längsträger 120 einstückig, so dass das Fahrzeugrahmenfrontmodul 100 aus nur einem Träger besteht, der den in der Fig. 1 gezeigten bogenförmigen Verlauf aufweist. In einer alternativen Ausführungsform kann das Fahrzeugrahmenfrontmodul 100 aus drei Längsträgern bestehen, nämlich einem Längsträger, der den ersten geraden Bereich 112 bildet, einem Längsträger, der den ersten und zweiten bogenförmigen Bereich 114, 124 bildet, und einem Längsträger, der den zweiten geraden Bereich 122 bildet.

Der erste bogenförmige Bereich 114 weist ein erstes Ende 116 auf und der zweite bogenförmige Bereich 124 weist ein zweites Ende 126 auf. Das erste Ende 116 und das zweite Ende 126 sind jeweils diejenigen Enden des ersten und zweiten bogenförmigen Bereichs 114, 124, an denen die geraden Bereiche 112, 122 nicht verbunden sind. Wie in der Fig. 1 zu sehen ist, sind das erste Ende 116 und das zweite Ende 126 miteinander stoßseitig verbunden, beispielsweise über eine Schweißnaht 130 miteinander verschweißt. Somit bilden die ersten und zweiten bogenförmigen Bereiche 114, 124 einen bogenförmigen Vorderbereich des Fahrzeugrahmenfrontmoduls 100.

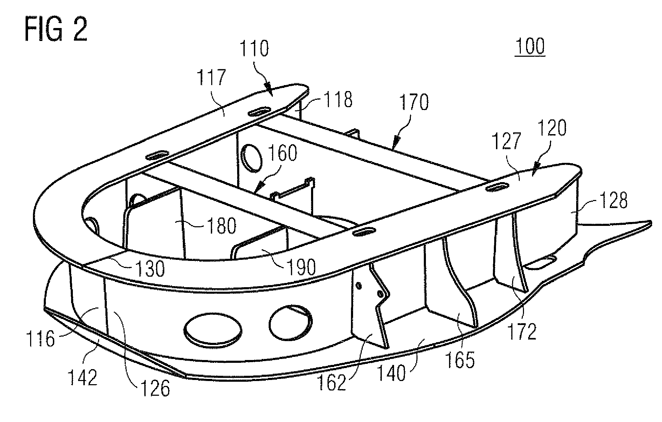

Unter zusätzlichem Verweis auf die Fig. 2 ist zu sehen, dass der erste Längsträger 110 einen ersten Obergurt 117 und einen mit dem ersten Obergurt 117 verschweißten ersten vertikalen Steg 118 aufweist. Gleichermaßen weist der zweite Längsträger 120 einen zweiten Obergurt 127 und einen mit dem zweiten Obergurt 127 verschweißten zweiten vertikalen Steg 128 auf. In der Draufsicht auf das Fahrzeugrahmenfrontmodul 100 der Fig. 1 sind der erste vertikale Steg 118 und der zweite vertikale Steg 128 mit gestrichelten Linien angedeutet, da der erste Obergurt 117 bzw. der zweite Obergurt 127 jeweils den ersten vertikalen Steg 118 bzw. den zweiten vertikalen Steg 128 verdecken. Der erste und zweite Obergurt 117, 127 bilden somit zusammen mit dem ersten und zweiten vertikalen Steg 118, 128 jeweils einen T-förmigen ersten und zweiten Längsträger 110, 120.

Die Verschweißung des ersten und zweiten Obergurts 117, 127 mit dem ersten und zweiten Steg 118, 128 kann über die gesamte Länge des ersten und zweiten Längsträgers 110, 120 erfolgen. Alternativ sind der erste und zweite Obergurt 117, 127 mit dem ersten und zweiten Steg 118, 128 an mehreren Stellen über mehrere erste und zweite Schweißnähte miteinander verbunden.

In der Fig. 2 ist ferner zu sehen, dass der erste Obergurt 117 bzw. der erste vertikale Steg 118 am ersten Ende 116 des ersten bogenförmigen Bereichs 114 mit dem zweiten Obergurt 127 bzw. dem zweiten vertikalen Steg 128 am zweiten Ende 126 des zweiten bogenförmigen Bereichs 124 über die Schweißnaht 130 miteinander verschweißt sind. Dabei ist es bevorzugt, dass der erste bogenförmige Bereich 114 und der zweite bogenförmige Bereich 124 im Wesentlichen bogenförmig sind und nach dem Verbinden einen allgemein bogenförmigen Vorderbereich des Fahrzeugrahmenfrontmoduls 100 bilden. In einer Ausgestaltung können der erste bogenförmige Bereich 114 und der zweite bogenförmige Bereich 124 jeweils teilkreisförmig mit konstantem Radius ausgeführt sein.

Das Fahrzeugrahmenfrontmodul 100 hat ferner eine Längsachse 102, die sich im Wesentlichen mittig zwischen dem ersten und zweiten vertikalen Steg 118, 128 von vorne nach hinten erstreckt. Bevorzugt sind der erste Längsträger 110 und der zweite Längsträger 120 bezüglich der Längsachse 102 symmetrisch zueinander angeordnet sind. Somit sind auch der erste vertikale Steg 118 und der zweite vertikale Steg 128 bezüglich der Längsachse 102 im Wesentlichen symmetrisch zueinander angeordnet.

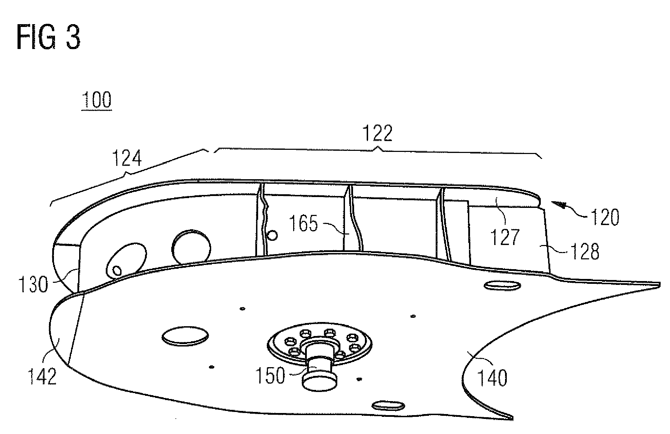

Das Fahrzeugrahmenfrontmodul 100 weist ferner eine Tragplatte 140 auf, an der ein Königszapfen 150 (siehe Fig. 3) befestigt ist. Die Tragplatte 140 erstreckt sich über den gesamten Bereich zwischen dem ersten und zweiten Längsträger 110, 120 und ist an einer Unterseite der ersten und zweiten vertikalen Stege 118, 128 angeordnet. Die Tragplatte 140 kann in der in der Fig. 1 bis 3 gezeigten Ausführung die Untergurte (nicht gezeigt) der ersten und zweiten Längsträger 110, 120 ersetzen. Jedoch kann die Tragplatte 140 in einer alternativen Ausgestaltung an eine Unterseite der Untergurte der ersten und zweiten Längsträger 110, 120 von unten angebracht sein.

Die Tragplatte 140 ist dazu ausgebildet, mit einer zugfahrzeugseitigen Sattelkupplungsplatte in Kontakt zu treten und jegliche auftretende vertikale Kräfte des Fahrzeuganhängers in die zugfahrzeugseitige Sattelkupplungsplatte zu leiten. Damit der Fahrzeuganhänger problemlos mit einem Zugfahrzeug gekoppelt werden kann und damit die Tragplatte 140 auf die zugfahrzeugseitige Sattelkupplungsplatte aufgesetzt werden kann, ist die Tragplatte 140 an ihrer Vorderkante 142 nach schräg oben abgekantet. Somit kann das Zugfahrzeug beim Rückwärtsfahren problemlos unter die Tragplatte 140 fahren, ohne dass hier eine Berührung mit der Stoßseite der Tragplatte 140 erfolgt.

Das Fahrzeugrahmenfrontmodul 100 weist außerdem einen ersten Querträger 160 und einen zweiten Querträger 170 auf, die sich jeweils zwischen dem ersten geraden Bereich 112 und dem zweiten geraden Bereich 122 erstrecken. Alternativ können sich der erste und zweite Querträger 160, 170 auch zwischen dem ersten und zweiten gebogenen Bereich 114, 124 erstrecken. Vorzugsweise ist der erste Querträger 160 in Längsrichtung des Fahrzeugrahmenfrontmoduls 100 vor dem Königszapfen 150 angeordnet und der zweite Querträger 170 ist bevorzugt in Längsrichtung des Fahrzeugfrontmoduls 100 hinter dem Königszapfen 150 angeordnet. Alternativ können sowohl der erste Querträger 160 als auch der zweite Querträger 170 vor bzw. hinter dem Königszapfen 150 verlaufen. Der Königszapfen 150 ist in der Fig. 1 durch einen gestrichelten Kreis angedeutet.

Der erste Querträger 160 und der zweite Querträger 170 sind jeweils mit einem vertikalen Steg 162, 172 und einem Obergurt 164, 174 versehen, wobei der vertikale Steg 162, 172 am Obergurt 164, 174 nicht mittig angebracht sein muss. Demnach können der vertikale Steg 162, 172 und der Obergurt 164, 174 jeweils einen L-förmigen Querträger 160, 170 bilden. Alternativ können jedoch der erste und der zweite Querträger 160, 170 mit einem T-Profil, Doppel-T-Profil, L-Profil, Hohlprofil oder lediglich mit einem vertikalen Steg ausgeführt sein.

In der Fig. 1 ist außerdem zu erkennen, dass das Fahrzeugrahmenfrontmodul 100 ferner einen ersten Stützlängsträger 180 und einen zweiten Stützlängsträger 190 aufweist, die sich vom ersten bogenförmigen Bereich 114 bzw. zweiten bogenförmigen Bereich 124 im Wesentlichen von vorne nach hinten erstrecken. Der erste und zweite Stützlängsträger 180, 190 werden jeweils vom ersten Querträger 160 unterbrochen, an dem der erste und zweite Stützlängsträger 180, 190 angeschweißt sind. Der erste Stützlängsträger 180 befindet sich bevorzugt rechts vom Königszapfen 150 und der zweite Stützlängsträger 190 befindet sich bevorzugt links vom Königszapfen 150. Alternativ können der erste und zweite Stützlängsträger 180, 190 durchgängig sein.

Mit den beiden Querträgern 160, 170, den beiden Stützlängsträgern 180, 190, die im Bereich um den Königszapfen 150 verlaufen, und der Tragplatte 140 ist ein steifes und stabiles Fahrzeugrahmenfrontmodul 100 gebildet, das den auftretenden Vertikalkräften standhält und zuverlässig in die zugfahrzeugseitige Sattelkupplungsplatte überträgt. Außerdem kann durch den gerundeten Frontbereich des Fahrzeugrahmenfrontmoduls 100 die Anzahl der vertikalen Schweißnähte gegenüber einer gewöhnlichen Ausgestaltung reduziert werden, bei der zwei beabstandete Längsträger mit einem im Wesentlichen senkrecht dazu verlaufenden Querträger an beiden Enden verschweißt ist.

Um das Fahrzeugrahmenfrontmodul 100 zusätzlich zu versteifen, ist wenigstens ein vertikaler Versteifungssteg 165 optionaler vorgesehen, der zwischen dem Obergurt 117 bzw. 127 und der Tragplatte 140 jeweils außen vorgesehen ist.

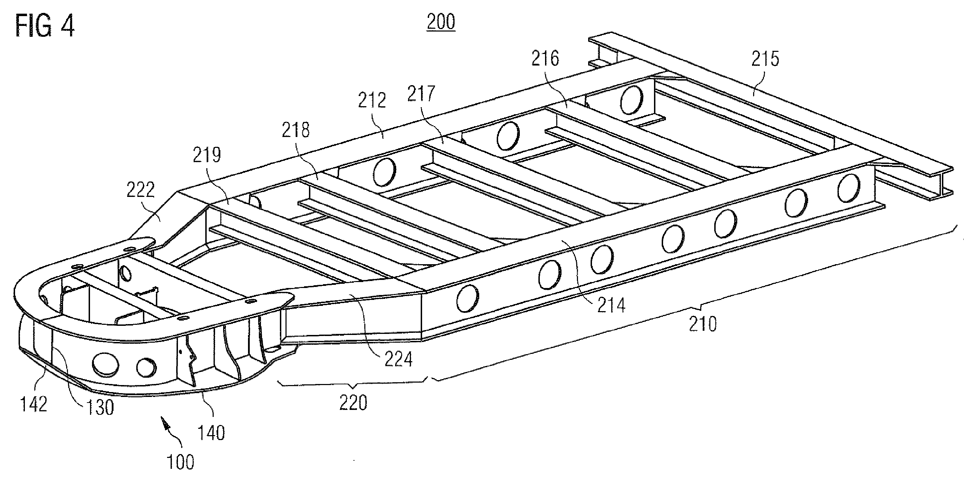

In der Fig. 4 ist ein Fahrzeugrahmen 200 in perspektivischer Ansicht gezeigt. Der Fahrzeugrahmen 200 weist einen Fahrzeugrahmenheckbereich 210, einen Fahrzeugrahmenübergangsbereich 220 und das in den Fig. 1 bis 3 dargestellte Fahrzeugrahmenfrontmodul 100 auf. Der Fahrzeugrahmenheckbereich 210, der Fahrzeugrahmenübergangsbereich 220 und das Fahrzeugrahmenfrontmodul 100 sind miteinander verschweißt, vernietet und/oder verschraubt.

Der Fahrzeugrahmenheckbereich 210 weist einen ersten Hauptlängsträger 212 und einen divergent zum ersten Hauptlängsträger 212 verlaufenden zweiten Hauptlängsträger 214 auf. Beide Hauptlängsträger 212, 214 sind bevorzugt als Doppel-T-Profile mit einem Obergurt, einem Untergurt und einem zwischen Obergurt und Untergurt angeordneten vertikalen Steg ausgeführt. Der erste und zweite Hauptlängsträger 212, 214 können beispielsweise jeweils als mehrstückige Module ausgeführt sein, die ebenfalls zusammengeschweißt sind.

Mehrere Querträger 215, 216, 217, 218, 219 verlaufen im Wesentlichen senkrecht zum ersten und zweiten Hauptlängsträger 212, 214 und sind mit diesen zur Bildung des Fahrzeugrahmenheckbereichs 210 verschweißt. Auch die Querträger 215, 216, 217, 218, 219 sind vorzugsweise als Doppel-T-oder T-Profile ausgeführt.

Der Fahrzeugrahmenübergangsbereich 220 weist einen ersten Übergangslängsträger 222 und einen zweiten Übergangslängsträger 224 auf, die wiederum bevorzugt als Doppel-T-oder T-Träger ausgeführt sein können. Die ersten und zweiten Übergangslängsträger 222, 224 verlaufen im Wesentlichen schräg zueinander und enden in dem ersten und zweiten Längsträger 110, 120. Vorzugsweise ist der Abstand zwischen dem ersten und zweiten Hauptlängsträger 212, 214 des Fahrzeugrahmenheckbereichs 210 größer als der Abstand zwischen dem ersten und zweiten Längsträger 110, 120 am hinteren Ende des Fahrzeugrahmenfrontmoduls 100. Die stufenlose Abstandänderung wird von den ersten und zweiten Übergangslängsträgern 222, 224 umgesetzt. Somit kann der in Draufsicht betrachtete Fahrzeugrahmen 200 als konisch bezeichnet werden, da sich der Verlauf der Längsträger von vorne nach hinten im Allgemeinen im Übergangsbereich 220 vergrößert.

Die Höhe des ersten und zweiten Hauptlängsträgers 212, 214 kann größer als die Höhe des ersten und zweiten Übergangslängsträgers 222, 224 und des ersten und zweiten Längsträgers 110, 120 sein, wobei vorzugsweise die Obergurte der einzelnen Längsträger des Fahrzeugrahmenfrontmoduls 100, des Fahrzeugrahmenübergangsbereichs 220 und des Fahrzeugrahmenheckbereichs 210 im Wesentlichen in einer Ebene verlaufen. Alternativ können jedoch die Obergurte des Fahrzeugrahmenübergangsbereichs 210 abgekröpft sein, um beispielsweise einem aufgesetzten Container (in den Figuren nicht dargestellt) eine seitliche Abstützung bereitzustellen.

Der Fahrzeugrahmen 200 der Fig. 4 ist bevorzugt ein Fahrzeugrahmen eines Kippsattelaufliegers. Der Fahrzeugrahmen 200 weist deshalb in seitlicher Verlängerung des Querträgers 215 Schwenklager (in der Fig. 4 nicht explizit dargestellt) auf, die eine Kippmulde am Fahrzeugrahmenheckbereich 210 schwenkbar befestigen. Die Schwenklager, von denen wenigstens eins auf jeder Seite des Fahrzeugrahmenheckbereichs 210 vorgesehen ist, definieren eine Schwenkachse, um die eine auf dem Fahrzeugrahmen aufgesetzte Kippmulde schwenkbar ist.

Zum Schwenken der Kippmulde ist im Fahrzeugrahmenfrontmodul 100 eine Hubzylinderaufnahme (in den Figuren nicht explizit dargestellt) vorgesehen, in die wenigstens ein hydraulisch oder pneumatisch betätigbarer Hubzylinder eingesetzt werden kann. Der wenigstens eine Hubzylinder kann dann die Kippmulde in eine gewünschte Höhe um die Schwenkachse schwenken, damit das Ladegut aus der Kippmulde geschüttet werden kann.

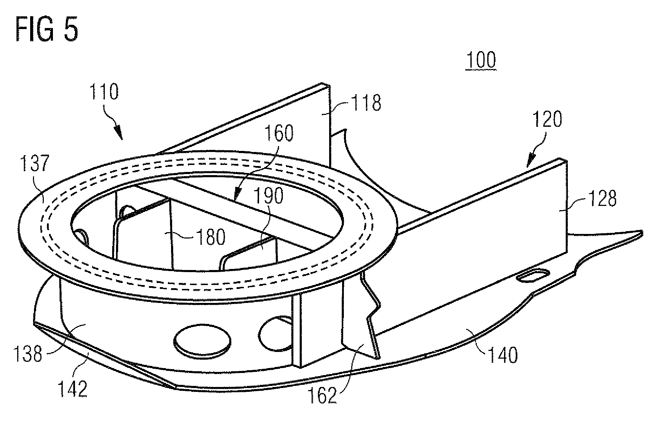

In der Fig. 5 ist eine weitere Ausführungsform eines Fahrzeugrahmenfrontmoduls 100 gezeigt. Das Fahrzeugrahmenfrontmodul 100 der Fig. 5 weist einen durchgängigen vertikalen Steg 138 auf, der in Draufsicht im Wesentlichen konzentrisch um den Königszapfen 150 (in der Fig. 5 nicht explizit gezeigt) angeordnet ist. Vorzugsweise ist der durchgängige vertikale Steg 138 ein vertikal angeordnetes Rohrstück. Auf der Oberseite des durchgängigen vertikalen Stegs 138 ist ein Obergurt 137 angebracht, der einstückig oder mehrstückig sein kann In der Fig. 5 ist der kreisförmige Verlauf der Oberseite des vertikalen Stegs 138 mit gestrichelten Linien angedeutet.

Das in der Fig. 5 gezeigt Fahrzeugrahmenfrontmodul 100 weist ferner einen ersten vertikalen Steg 118 auf, der an einer in Vorwärtsrichtung rechten Seite des vertikalen Stegs 138 angebracht ist und sich tangential vom vertikalen Steg 138 im Wesentlichen von vorne nach hinten erstreckt. In ähnlicher Weise weist das Fahrzeugrahmenfrontmodul 100 einen zweiten vertikalen Steg 128 auf, der an einer in Vorwärtsrichtung linken Seite des vertikalen Stegs 138 angebracht ist und sich tangential vom vertikalen Steg 138 im Wesentlichen von vorne nach hinten erstreckt. Wie in den Fig. 1 bis 3 bereits gezeigt, ist an den Unterseiten der vertikalen Stege 118, 128, 138 eine Tragplatte 140 angebracht, die eine im Wesentlichen schräg nach oben verlaufende Vorderkante 142 auf weist.

Hinsichtlich des Fahrzeugrahmens 200 ist zu erwähnen, dass dieser nicht auf die Verwendung als Fahrzeugrahmen für Kippsattelauflieger beschränkt ist. Alternativ kann der Fahrzeugrahmen als gewöhnlicher Sattelaufliegerfahrzeugrahmen für Container oder dgl. verwendet werden. Ebenfalls ist das abgerundete Fahrzeugrahmenfrontmodul 100 nicht auf eine Verwendung mit einer Sattelkupplung beschränkt. Die Ausgestaltung eines gerundeten bzw. bogenförmigen Fahrzeugrahmenfrontmoduls 100 kann auch bei landwirtschaftliche Anhängern, Gooseneck-Anhängern, Sattelanhängern bzw. Anhängern jeglicher Art vorteilhaft sein.

Der Fahrzeugrahmen 200 kann in weiteren Ausgestaltungen auch einen Verlauf haben, bei dem sich der Abstand der Längsträger 110, 120 des Fahrzeugrahmenfrontmoduls 100 und der Abstand der Längsträger 222, 224 des Fahrzeugrahmenübergangsbereichs von vorne nach hinten vergrößern, sich jedoch dann der Abstand der Hauptlängsträger 212, 214 des Fahrzeugrahmenheckbereichs von vorne nach hinten verkleinert. In dieser Ausgestaltung weist der der mittlere Bereich des Fahrzeugrahmens 200 breiter als der Front- bzw. Heckbereich.

Obwohl die bevorzugten Ausführungsformen dieser Erfindung hierin beschrieben worden sind, können Verbesserungen und Modifikationen hierin eingearbeitet sein, ohne vom Schutzbereich der folgenden Ansprüche abzuweichen.

## Patentansprüche

1. Fahrzeugrahmenfrontmodul (100) eines Fahrzeugrahmens (200) eines Fahrzeuganhängers, mit:
- einem einem Zugfahrzeug zugewandten vorderen Bereich,
- einem vom Zugfahrzeug abgewandten hinteren Bereich,
- einem ersten vertikalen Steg (118) mit einem ersten geraden Bereich (112) und einem ersten bogenförmigen Bereich (114), und
- einem zweiten vertikalen Steg (128) mit einem zweiten geraden Bereich (122) und einem zweiten bogenförmigen Bereich (124),
wobei der erste bogenförmige Bereich (114) und der zweite bogenförmige Bereich (124) miteinander verbunden sind, **dadurch gekennzeichnet, dass**
der erste gerade Bereich (112) und der zweite gerade Bereich (122) in einer Richtung vom vorderen Bereich zum hinteren Bereich divergierend verlaufen.

2. Fahrzeugrahmenfrontmodul (100) nach Anspruch 1, wobei die miteinander verbundenen ersten und zweiten vertikale Stege (118, 128) in Draufsicht eine Form haben, die nach vorne geschlossen und nach hinten offen ist.

3. Fahrzeugrahmenfrontmodul (100) nach einem der vorhergehenden Ansprüche, ferner mit:
- einem ersten Obergurt (117), der mit einer Oberseite des ersten vertikalen Stegs (118) verbunden ist, und
- einem zweiten Obergurt (127), der mit einer Oberseite des zweiten vertikalen Stegs (128) verbunden ist.

4. Fahrzeugrahmenfrontmodul (100) nach Anspruch 3, ferner mit
mehreren ersten Schweißnähten, die den ersten Obergurt (117) mit dem ersten vertikalen Steg (118) verbinden, und
mehreren zweiten Schweißnähten, die den zweiten Obergurt (127) mit dem zweiten vertikalen Steg (128) verbinden.

5. Fahrzeugrahmenfrontmodul (100) nach einem der vorhergehenden Ansprüche, wobei der erste vertikale Steg (118) und der zweite vertikale Steg (128) einstückig sind.

6. Fahrzeugrahmenfrontmodul (100) nach einem der Ansprüche 1 bis 4, ferner mit zumindest einer Schweißnaht (130), die den ersten bogenförmigen Bereich (114) mit dem zweiten bogenförmigen Bereich (124) stoßseitig verbindet.

7. Fahrzeugrahmenfrontmodul (100) nach einem der vorhergehenden Ansprüche, wobei das Fahrzeugrahmenfrontmodul (100) eine Längsachse (102) hat, die sich im Wesentlichen mittig zwischen dem ersten und zweiten vertikalen Steg (118, 128) von vorne nach hinten erstreckt, und der erste vertikale Steg (118) und der zweite vertikale Steg (128) bezüglich der Längsachse symmetrisch zueinander angeordnet sind.

8. Fahrzeugrahmenfrontmodul (100) nach einem der vorherigen Ansprüche, ferner mit einer Tragplatte (140), die an einer Unterseite des ersten vertikalen Stegs (118) und des zweiten vertikalen Stegs (128) angeordnet ist.

9. Fahrzeugrahmenfrontmodul (100) nach Anspruch 8, wobei die Tragplatte (140) eine Vorderkante (142) aufweist, die sich im Wesentlichen nach schräg oben erstreckt.

10. Fahrzeugrahmenfrontmodul (100) nach einem der vorherigen Ansprüche, ferner mit wenigstens einem Querträger (160, 170), der sich zwischen dem ersten vertikalen Steg (118) und dem zweiten vertikalen Steg (128) erstreckt.

11. Fahrzeugrahmenfrontmodul (100) nach einem der vorhergehenden Ansprüche, ferner mit wenigstens einem Stützlängsträger (180, 190), der mit dem ersten bogenförmigen Bereich (114) des ersten vertikalen Stegs (118) oder dem zweiten bogenförmigen Bereich (124) des zweiten vertikalen Stegs (128) verbunden ist und sich im Wesentlichen von vorne nach hinten erstreckt.

12. Fahrzeugrahmenfrontmodul (100) nach einem der vorhergehenden Ansprüche, ferner mit
einem ersten Untergurt, der mit einer Unterseite des ersten vertikalen Stegs (118) verbunden ist, und
einem zweiten Untergurt, der mit einer Unterseite des zweiten vertikalen Stegs (128) verbunden ist.

13. Fahrzeugrahmen (200) eines Fahrzeuganhängers, mit:
einem Fahrzeugrahmenheckbereich (210) mit einem ersten Hauptlängsträger (212) und einem vom ersten Hauptlängsträger beabstandet angeordneten zweiten Hauptlängsträger (214), und
einem Fahrzeugrahmenfrontmodul (100) nach einem der vorhergehenden Ansprüche, wobei der erste vertikale Steg (118) mit dem ersten Hauptlängsträger (212) und der zweite vertikale Steg (128) mit dem zweiten Hauptlängsträger (214) verbunden sind.

14. Fahrzeugrahmen (200) nach Anspruch 13, wobei der seitliche Abstand der ersten und zweiten vertikalen Stege (118, 128) des Fahrzeugrahmenfrontmoduls kleiner als der seitliche Abstand der Hauptlängsträger (212, 214) des Fahrzeugrahmenheckbereichs (210) ist.

## Claims

1. A vehicle frame front module (100) of a vehicle frame (200) of a vehicle trailer, comprising:
- a front portion facing to a towing vehicle,
- a rear portion facing away from the towing vehicle,
- a first vertical web (118) including a first straight portion (112) and a first arc-shaped portion (114), and
- a second vertical web (128) including a second straight portion (122) and a second arc-shaped portion (124),
wherein the first arc-shaped portion (114) and the second arc-shaped portion (124) are connected to each other, **characterized in that**
the first straight portion (112) and the second straight portion (122) divergingly extend in a direction from the front portion to the rear portion.

2. The vehicle frame front module (100) of claim 1, wherein the first and second vertical webs (118, 128), which are connected to each other, include a shape, which is closed to the front and open to the rear, in top view.

3. The vehicle frame front module (100) of any one of the preceding claims, further comprising:
- a first upper boom (117) connected to an upper side of the first vertical web (118), and
- a second upper boom (127) connected to an upper side of the second vertical web (128).

4. The vehicle frame front module (100) of claim 3, further comprising:
a plurality of first welds connecting the first upper boom (117) to the first vertical web (118), and
a plurality of second welds connecting the second upper boom (127) to the second vertical web (128).

5. The vehicle frame front module (100) of any one of the preceding claims, wherein the first vertical web (118) and the second vertical web (128) are integrally formed.

6. The vehicle frame front module (100) of any one of claims 1 to 4, further comprising at least a weld (130) connecting the first arc-shaped portion (114) to the second arc-shaped portion (124) at the scour side.

7. The vehicle frame front module (100) of any one of the preceding claims, wherein the vehicle frame front module (100) comprises a longitudinal axis (102) extending substantially central between the first and second vertical webs (118, 128) from front to rear, and the first vertical web (118) and the second vertical web (128) are symmetrically arranged to one another with respect to the longitudinal axis.

8. The vehicle frame front module (100) of any one of the preceding claims, further including a support plate (140) arranged at a lower side of the first vertical web (118) and the second vertical web (128).

9. The vehicle frame front module (100) claim 8, wherein the support plate (140) comprises a front edge (142) extending substantially inclined upward.

10. The vehicle frame front module (100) of any one of the preceding claims, further comprising at least one transversal beam (160, 170) extending between the first vertical web (118) and the second vertical web (128).

11. The vehicle frame front module (100) of any one of the preceding claims, further comprising at least one longitudinal support beam (180, 190) connected to the first arc-shaped portion (114) of the first vertical web (118) or the second arc-shaped portion (124) of the second vertical web (128) and extending substantially from front to rear.

12. The vehicle frame front module (100) of any one of the preceding claims, further comprising
a first lower boom connected to a lower side of the first vertical web (118), and
a second lower boom connected to a lower side of the second vertical web (128).

13. A vehicle frame (200) of a vehicle trailer, comprising:
a vehicle frame rear portion (210) including a first main longitudinal beam (212) and a second main longitudinal beam (214) arranged spaced apart from the first main longitudinal beam, and
a vehicle frame front module (100) of any one of the preceding claims, wherein the first vertical web (118) is connected to the first main longitudinal beam (212) and the second vertical web (128) is connected to the second main longitudinal beam (214).

14. The vehicle frame (200) of claim 13, wherein the lateral distance of the first and second vertical webs (118, 128) of the vehicle frame front module is smaller than the lateral distance of the main longitudinal beams (212, 214) of the vehicle frame rear portion (210).

## Revendications

1. Module frontal de châssis de véhicule (100) d'un châssis de véhicule (200) d'une remorque de véhicule présentant :
- une zone avant tournée vers un véhicule tracteur,
- une zone arrière éloignée du véhicule tracteur,
- une première nervure verticale (118) avec une première zone droite (112) et une première zone arquée (114), et
- une seconde nervure verticale (128) avec une seconde zone droite (122) et une seconde zone arquée (124),
dans lequel la première zone arquée (114) et la seconde zone arquée (124) sont reliées entre elles, **caractérisé en ce que**
la première zone droite (112) et la seconde zone droite (122) s'étendent de manière divergente dans une direction de la zone avant à la zone arrière.

2. Module frontal de châssis de véhicule (100) selon la revendication 1, dans lequel les première et seconde nervures verticales (118, 128) reliées entre elles présentent, dans une vue en élévation, une forme qui est fermée vers l'avant et ouverte vers l'arrière.

3. Module frontal de châssis de véhicule (100) selon l'une quelconque des revendications précédentes, de plus avec :
- une première membrure supérieure (117) qui est reliée à un côté supérieur de la première nervure verticale (118), et
- une seconde membrure supérieure (127) qui est reliée à un côté supérieur de la seconde nervure verticale (128).

4. Module frontal de châssis de véhicule (100) selon la revendication 3, de plus avec plusieurs premiers cordons de soudure qui relient la première membrure supérieure (117) à la première nervure verticale (118), et
plusieurs seconds cordons de soudure qui relient la seconde membrure supérieure (127) à la seconde nervure verticale (128).

5. Module frontal de châssis de véhicule (100) selon l'une quelconque des revendications précédentes, dans lequel la première nervure verticale (118) et la seconde nervure verticale (128) sont d'un seul tenant.

6. Module frontal de châssis de véhicule (100) selon l'une quelconque des revendications 1 à 4, de plus avec au moins un cordon de soudure (130) qui relie côté impact la première zone arquée (114) à la seconde zone arquée (124).

7. Module frontal de châssis de véhicule (100) selon l'une quelconque des revendications précédentes, dans lequel le module frontal de châssis de véhicule (100) présente un axe longitudinal (102) qui s'étend sensiblement au milieu entre la première et la seconde nervure verticale (118, 128) de l'avant vers l'arrière et la première nervure verticale (118) et la seconde nervure verticale (128) étant agencées de manière symétrique par rapport à l'axe longitudinal.

8. Module frontal de châssis de véhicule (100) selon l'une quelconque des revendications précédentes, de plus avec une plaque de support (140) qui est agencée sur un côté inférieur de la première nervure verticale (118) et de la seconde nervure verticale (128).

9. Module frontal de châssis de véhicule (100) selon la revendication 8, dans lequel la plaque de support (140) présente une arête avant (142) qui s'étend sensiblement en biais vers le haut.

10. Module frontal de châssis de véhicule (100) selon l'une quelconque des revendications précédentes, de plus avec au moins une traverse (160, 170) qui s'étend entre la première nervure verticale (118) et la seconde nervure verticale (128).

11. Module frontal de châssis de véhicule (100) selon l'une quelconque des revendications précédentes, de plus avec au moins un longeron d'appui (180, 190) qui est relié à la première zone arquée (114) de la première nervure verticale (118) ou la seconde zone arquée (124) de la seconde nervure verticale (128) et s'étend sensiblement de l'avant vers l'arrière.

12. Module frontal de châssis de véhicule (100) selon l'une quelconque des revendications précédentes, de plus avec
une première membrure inférieure qui est reliée à un côté inférieur de la première nervure verticale (118) et
une seconde membrure inférieure qui est reliée à un côté inférieur de la seconde nervure verticale (128).

13. Châssis de véhicule (200) d'une remorque de véhicule avec :
une zone arrière de châssis de véhicule (210) avec un premier longeron principal (212) et un second longeron principal (214) agencé à distance du premier longeron principal, et
un module frontal de châssis de véhicule (100) selon l'une quelconque des revendications précédentes, dans lequel la première nervure verticale (118) est reliée au premier longeron principal (212) et la seconde nervure verticale (128) étant reliée au second longeron principal (214).

14. Châssis de véhicule (200) selon la revendication 13, dans lequel la distance latérale entre la première et la seconde nervure verticale (118, 218) du module frontal de châssis de véhicule est inférieure à la distance latérale entre les longerons principaux (212, 214) de la zone arrière de châssis de véhicule (210).
